Europäisches Patentamt

(19) European Patent Office

Office européen des brevets

(11) Publication number: **0 126 604**
A1

(12) # EUROPEAN PATENT APPLICATION

(21) Application number: **84303252.5**

(22) Date of filing: **14.05.84**

(51) Int. Cl.³: **B 65 G 39/02**

(30) Priority: **13.05.83 ZA 833413**
**10.06.83 ZA 834259**
**22.09.83 ZA 837045**

(71) Applicant: **F.A. Pressings (Proprietary) Limited,**
**52 Nicholls Street Chamdor, Krugersdorp Transvaal**
**Province (ZA)**

(43) Date of publication of application: **28.11.84**
**Bulletin 84/48**

(72) Inventor: **Roman, Gyula Laszlo, 19 Trezona Avenue**
**Mindalore, Krugersdorp Transvaal (ZA)**

(84) Designated Contracting States: **AT BE CH DE FR GB IT**
**LI NL SE**

(74) Representative: **Carpenter, David, Marks & Clerk Alpha**
**Tower Suffolk Street Queensway, Birmingham B1 1TT**
**(GB)**

(54) **Conveyor roller and method of assembly thereof.**

㊿ A conveyor roller comprising a drum 3 rotatably supported on a shaft 1 by a bearing assembly 4, 5, 6, the drum 3 comprising a right circular cylindrical tubular inner sleeve 8 formed of metal, and a coaxial right circular cylindrical outer sleeve 9 formed of a hard, wear resistance, plastics material. The invention also resides in a method of assembling such as conveyor roller.

ACTORUM AG

## BACKGROUND TO THE INVENTION

THIS INVENTION relates to conveyor idlers or rollers of the type adapted to support conveyor belts used in mining, industrial and like applications.

Conveyor rollers generally comprise a rigid sleeve or drum which is rotatably mounted by means of suitable bearings on a shaft, the shaft being supported in a cradle or frame which in turn is mounted to a foundation. Generally the sleeve is formed from a steel tube. Problems with steel or metal sleeves occur when the idler jams due to bearing seizure or for other reasons. When this occurs, the belt runs over a stationary idler causing the steel sleeve to heat up and wear away, resulting in the belt being damaged.

Other problems arise when the conveyor is carrying uneven loads which from a protruberance on the underside of the belt which impinges on the conveyor idler as the protruberance passes over the idler. This can cause denting of the sleeve as well

- 3 -

as jolting and possible damage to the bearing assembly.

Further problems with conventional rollers occur because the outer surface of the sleeve is not absolutely concentric with the axis of rotation. Rotation of an eccentric roller causes rapid deterioration of the bearing assembly as well as setting up harmonic vibrations in the belt. Also, because the steel sleeve is smooth, the belt will tend to "wander" relative to the idler which is considered undesirable.

In attempts to alleviate at least some of the abovementioned problems conveyor idlers have been developed being formed of or having a outer cover of rubber of soft plastics which absorbs some of the shocks to which conveyor idlers are subjected. In this regard reference may be made ot British Patents No's 1076499, 1319 316, 1344 533, 1366 389 and 1405 679.

In particular British Patents No 1076499 describes a roller having a cylindrical drum covered with a rubber sleeve. The drum is supported off its bearings by means of rubber rings.

A problem with rubber or like synthetic plastics materials such as polyethelene is that once the roller jams, the relative movement between belt and stationary roller causes rapid breakdown of the cover, eventually leading to damage to the belt. Also, such materials tend not to be dimensionally stable, and as soon as an eccentricity occurs in the roller, further rotation causes rapid deterioration of the eccentric condition.

It is an object of the invention to provide a conveyor idler wnich runs smoothly and whicn has superior wear or operational characteristics in at least some applications.

According to the invention there is provided a conveyor roller comprising a drum rotatably supported on a shaft by a bearing assembly, the drum comprising a right circular cylindrical tubular inner sleeve formed of metal, and a coaxial right circular cylindrical outer sleeve formed of a hard, wear resistant, plastics material.

Preferably tne hard plastics sleeve will

be self supporting and the metal sleeve will be formed of thin steel tube.

Further there is provided for the plastics material to have self lubricating characteristics. Specifically it is envisaged that the plastics material will have physical characteristics similar to that of rigid polyvinyl chloride (rigid PVC), polypropylene, or high density polyethelene.

Further there is provided for the outer surface of the drum to be machine turned such that the axis of the outer surface is concentric with the axis of rotation of the roller. During turning a fine helical groove or a plurality of concentric cirucular grooves may be cut into the outer surface of the plastics sleeve, along substantially the entire length of the sleeve. The fine groove will not materially affect frictional resistances to movement tangentally to the sleeve but will increase frictional resistance to movement parallel to the axis of rotation of the idler

The bearing assembly by means of which

/...

the drum is supported on the shaft may comprise a pair of roller bearings preferably mounted in end caps formed of a hard plastics material. The plastics material of the end caps may be a nylon 66 derivative and will preferably be moulded to the required shape. The shape may include a ribbed formation.

It is envisaged that the plastics material of the sleeve will have characteristics substantially as follows:

| | |
|---|---|
| mass density: | 1350 - 1460 kg/m3 |
| heat reversion: | less than 3.0% |
| specific heat capacity: | 0,85 - 2.10 kJ/kg°C |
| vicat softening point: | 82 - 85 |
| tensile strength @ 20°C: | 56 MPa (at yield) |
| modulus of elasticity: | 3,2 GPa |
| comprehensive strength: | 80 MPa |

Further tnere is provided for the polymeric sleeve to comprise a length of rigid PVC piping which during assembly of the idler is heat shrunk onto the metal sleeve. This material is suitable as it has a low coefficient of friction with a conveyor belt.

It will also be possible for tne plastics sleeve to have electrically conductive particles interspersed tnerethrougn which will assist in reducing electrostatic buildup on the roller in use.

The end caps may be press fitted into tne drum or alternatively may be screwed into thread formations formed on the inner surface of the drum.

The invention extends to a method of assembling a conveyor roller, the conveyor roller in tne assembled condition comprising a right circular cylindrical drum having an inner sleeve formed of metal and an outer sleeve formed of hard plastics material, the drum being supported off a shaft by means of bearing assemblies located on the snaft near each end thereof, the bearing assemblies being mounted in suitable end caps which seat in each end of the drum, the method including the steps of:

1)      heating at least the outer sleeve, to a condition of slight plasticity;

2)      placing the sleeves in end to end coaxial relationship;

3) urging the outer sleeve over the inner sleeve such that the two sleeves are concentric thereby forming a composite drums; and

4) allowing the composite drum to cool.

Further in accordance with this aspect of the invention there is provided for the method to include the steps of inserting centering means into the composite drum and rotating the drum about its axis, a cutting tool being used to shave a layer off the outer surface of the outer sleeve. Alternatively the cutting tool may be rotated around the drum. The cutting tool may be used to cut a circular or helical groove into the outer surface of the outer sleeve.

The urging of the outer sleeve over the inner sleeve may be achieved with the aid of an hydraulic ram or other mechanically assisting device.

## BRIEF DESCRIPTION OF THE DRAWINGS

The invention as described below by way

/...

of example with reference to the accompanying drawings in which:

Figure 1 shows a part cut away isometric view of a conveyor roller,

Figure 2 shows a part cut away side elevation of a conveyor roller assembling device,

Figure 3 shows a plan view of the device of Figure 2, and

Figure 4 shows an enlarged side view of the drum of a conveyor roller before assembly.

## DETAILED DESCRIPTION OF THE DRAWINGS

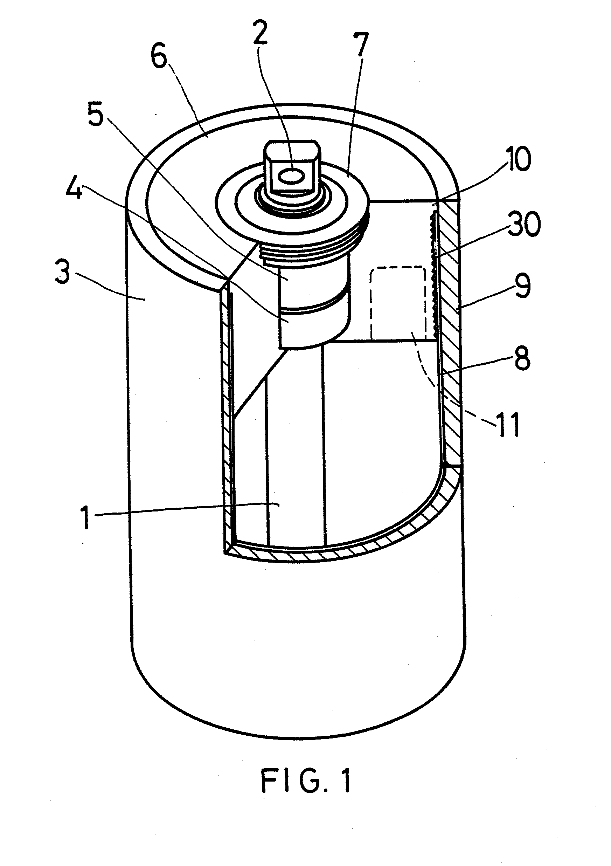

Referring initially to Figure 1, a conveyor roller comprises a rigid metal shaft 1 the ends 2 of which are shaped to fit into special formations on a support cradle (not shown). A drum 3 is rotatably supported on the shaft 1 by means of bearings 4 which seat on suitable journaled formations on the shaft. A labyrinth type seal 5 situated between the bearings 4 and the end 2 of the shaft inhibits the ingress of foreign particles into the bearing 4. The bearing 4 is mounted in a suitable end cap or bearing housing 6 which fits into the end of the drum 3 to thereby ensure that the drum

/...

3 is rotatably mounted on the shaft 1. The end cap 6 may be a press fit into the end of the drum 3 or, suitable thread formations on the inner surface of the drum may be engaged by co-operant thread formations thread formations formed on the outer surface of the end cap 6. The bearing 4 will preferably be a thrust roller bearing. Thread formations are shown at numeral 30.

A cover plate 7 screws into thread formations in the end cap to further prevent the ingress of foreign particles into the bearing assembly.

The drum 3 is a composite drum and comprises a inner metal sleeve 8 and an outer plastics sleeve 9. It is envisaged that the outer sleeve 9 will be formed of a rigid polyvinyl chloride (uPVC), high density polyethelene, or polypropelene. Other materials which may be used are a suitable Zytel (a Dupont product). Preferably the outer sleeve will be formed of a plastics material which is sufficiently wear resistant to withstand the rigours of use as a conveyor roller, and will not be brittle. However, it is considered important that the plastics material will have self lubricating characteristics such that relative movement between a conveyor belt and the surface of the roller is possible without too severe frictional resistance to relative movement.

It is envisaged that the end caps 6 will be moulded or otherwise formed from a nylon 66 derivative plastics material. This has the advantage in that such a material is to some extent resilient and thus shocks or transverse forces experienced by the roller will to an extent be absorbed in the end caps rather than being transferred directly to the bearings 5. The inner metal sleeve will preferably be formed of steel tube having a wall thickness of between 1 and 2 mm.

The end caps 6 have a radially projecting lip 10 the thickness of the lip being similar to the thickness of the metal sleeve 8. Thus, when the end cap is inserted in the end of drum 3 the lip 10 overlies the end of the metal sleeve and in this way corrosion of the metal sleeve will be minimized.

The end caps 6 may be formed having a multiplicity of cavities 11 formed therein which will

reduce the quantity of plastics material needed to form an end cap as well as assisting in providing a resilient nature to the end cap.

It will be appreciated that it is important that relative movement between the outer sleeve 9 and the inner sleeve 8 is not possible. For this reason it is advantageous if the outer sleeve can be tightly in contact with the inner sleeve 8. A most satisfactory method of manufacture which has been developed by applicant is to place the inner and outer sleeves in end on relationship in a suitable heating chamber. Thereafter, the two sleeves are heated and thereafter the outer sleeve is urged over the inner sleeve by compressing the two sleeves together. The outer sleeve is heated to a temperaturewhich allows the sleeve to become slightly plastic whereafter the sliding of the outer sleeve over the inner sleeve is possible. It will be appreciated that the diameter of the inner sleeve is the same or slightly larger than the internal diameter of the outer sleeve such that when the outer sleeve cools down, the outer sleeve will heat shrink into fixed contact with the inner sleeve 8. It has been found that no bonding material is required between the two sleeves.

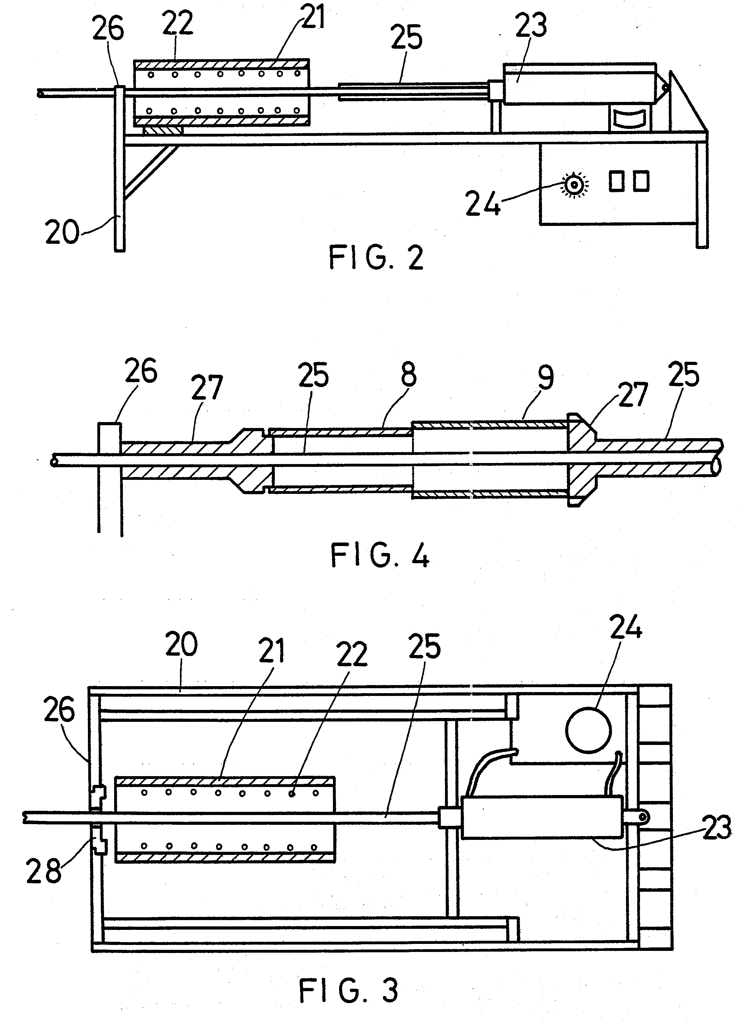

The apparatus for urging the two sleeves into coaxial allignment is shown in Figures 2 to 4. The apparatus comprises a metal frame 20 to which a cylindrical heating chamber 21 has been mounted. Heating coils 22 located on the inner surface of the heating chamber 21 are adapted to heat the interior of the heating chamber. An hydraulic piston and cylinder assembly 23 is mounted to the frame adjacent the heating chamber and control means and timing devices 24 are used to vary the load, the temperature, and the time of operation of the device. A central rod 25 which extends through the heating chamber 21 is adapted to have the drum of the conveyor roller threaded thereon. The hydraulic piston and cylinder assembly is adapted to press the unassembled drum against a bulkhead 26 located on the opposite side of the heating chamber from the hydraulic piston and cylinder assembly. The drum prior to assembly is shown in Figure 4. It comprises the outer sleeve 9 and the inner sleeve 8 which are held concentric with the elongate rod 25 by means of spacing elements 27. The spacing elements have formations which hold the sleeves in the correct position of end on alignment. The bulkhead 26 may have a central portion 28 which may be removed in order to provide access to the heating chamber. This removable portion is shown more clearly in Figure 3. In use, after heating of the unassembled drum, the two spacing elements 27 will be urged together by means of the hydraulic piston and cylinder assembly which will cause the outer sleeve 9 to move over the inner sleeve 8. Thereafter the drum will be removed or detached from the spacing elements 27 and the drum can be removed for further processing.

After assembly of the composite drum, the composite drum will be taken to a turning device such as a lathe. The composite drum will be mounted on the lathe in rotatable manner and thereafter a layer of pre-determined thickness will be shaved off the outer surface of the plastics outer sleeve. This turning of the composite drum will have the affect of ensuring that the outer surface of the drum is concentric with the axis of rotation of the roller. In addition, it will ensure that the outer surface is round. It is envisaged that the turning tool will form a helical groove in the outer surface of the outer sleeve the said groove serving to

improve the characteristics of travel of the belt over the roller. It is envisaged that the groove will to some extent, at least, prevent the belt wandering relative to the conveyor roller.

It has been found that a suitable plastics pipe may be used to form the outer sleeve. A suitable plastic pipe presently being used by applicant has physical properties as follows:

| | |
|---|---|
| mass density: | 1350 - 1460 kg/m3 |
| heat reversion: | less than 3.0% |
| specific heat capacity: | 0,85 / 2,10 kJ/kg°C |
| vicat softening point: | 82 - 85 |
| tensile strength @ 20°C: | 56 MPa (at yield) |
| modulus of elasticity: | 3,2 GPa |
| comprehensive strength: | 80 MPa |

It is envisaged that the metal inner sleeve will be formed of thin steel tubing. The steel tubing will serve as a support to the plastics outer sleeve and as such will add the strength to the composite drum. The thin steel tube will not however be as thick as steel sleeves conventionally used with conveyor idlers and therefor the weight of the

0126604

composite drum will be substantially the same or less than the weight of comparable steel drums. A further advantage of using thin steel tube is that should for some reason or other the conveyor roller jam, the thin steel tube will wear away relatively rapidly after the plastics outer layer has worn away. The wearing away of the steel tube within a short time will ensure that the belt is not damaged as has often happened with thicker steel rollers. In effect the thin steel tube will collapse after the belt has worn against the steel tube for any period of time. As previously mentioned, it is envisaged that because the outer layer is formed of a plastics material having suitable self lubricating characteristics the time taken to wear through the outer sleeve will be quite substantial and during normal maintenance checks the fact that a particular roller is not rotating should lead to the replacement of that particular roller before any damage can have been done.

There may be many variations to the above described embodiment without departing from the scope of the invention. As previously mentioned, the material from which the outer sleeve 9 may be formed

/...

can be varied although it is important that the
material is both hard and has self lubricating
characteristics.  Thus, the material will have a low
co-officient of friction relative to a conveyor belt.

It will also be possible for the outer
plastics sleeve 9 to have carbon powder, copper
flakes or similar metalic filaments interspersed
therein which will serve to reduce static build-up on
the roller.  This may be an important aspect where
the rollers are to be used in potentially combustive
conditions.

End caps which screw into the drum have
an advantage in that the idler may be serviced or
repaired in situ without specialist tools.

Claims:

1. A conveyor roller comprising a drum rotatably supported on a shaft by a bearing assembly, the drum comprising a right circular cylindrical tubular inner sleeve formed of metal, and a coaxial right circular cylindrical outer sleeve formed of a hard, wear resistant, plastics material.

2. A conveyor roller is claimed in claim 1 wherein the metal sleeve is formed of thin steel tube.

3. A conveyor roller is claimed in claim 2 wherein the thickness of the steel tube is between 1 and 2 mm thick.

4. A conveyor roller as claimed in any preceeding claim wherein the plastics outer sleeve has a self lubricating characteristic.

5. A conveyor roller as claimed in any preceeding claim wherein the plastics material from which the outer sleeve is formed is a rigid polyvinyl chloride.

6.    A conveyor roller is claimed in any one of claims 1 to 4 wherein the plastics material from which the outer sleeve is formed is polypropylene.

7.    A conveyor roller is claimed in any one of claims 1 to 4 wherein the plastics material from which the outer sleeve is formed is high density polyethelene.

8.    A conveyor roller is claimed in any preceeding claim wherein the outer surface of the outer sleeve has been machine turned such that the axis of the outer surface of the outer sleeve is coaxial with the axis of rotation of the roller.

9.    A conveyor roller is claimed in any preceeding claim wherein a helical groove or a multiplicity of coaxial circular grooves have been machine turned into the outer surface of the plastics sleeve along

0126604

substantially the outer length of the sleeve.

10. A conveyor roller is claimed in any preceeding claim wherein the bearing assembly comprises a pair of roller bearings located near each end of the shaft, the roller bearings being mounted in end caps formed of a hard plastics material.

11. A conveyor roller as claimed in claim 10 wherein the plastics material from which the end caps are formed is a nylon 66 derivative.

12. A conveyor roller as claimed in any preceeding claim wherein the plastics material of the sleeve has characteristics substantially as follows:

mass density:            1350 - 1460 kg/m3
heat reversion:          less than 3.0%
specific heat capacity:  0,85 - 2.10 kJ/kg°C
vicat softening point:   82 - 85
tensile strength @ 20°C: 56 MPa (at yield)

/...

modulus of elasticity:      3,2 GPa

compre⸺sive strength:        80 MPa

13.    A conveyor roller as claimed in any preceeding claim wherein the plastics outer sleeve comprises a length of tubular piping which has been heat shrunk onto the metal sleeve.

14.    A conveyor roller as claimed in any preceeding claim wherein the plastics outer sleeve has electric conductive particles interspersed therethrough.

15.    A conveyor roller as claimed in claim 10 wherein the end caps have been press fitted into the drum.

16.    A conveyor roller as claimed in claim 10 wherein the end caps have thread formations on the radially outer surface thereof which screws into thread formations formed on the radially inner surface of the drum.

17.    A method of assembling a conveyor roller,

/...

the conveyor roller in the assembled condition comprising a right circular cylindrical drum having an inner sleeve formed of metal and an outer sleeve formed of hard plastics material, the drum being supported off a shaft by means of bearing assemblies located on the shaft near each end thereof, the bearing assemblies being mounted in suitable end caps which seat in each end of the drum, the method including the steps of:

1.    heating at least the outer sleeve, to a condition of slight plasticity;

2.    placing the sleeves in end to end coaxial relationship;

3.    urging the outer sleeve over the inner sleeve such that the two sleeves are concentric thereby forming a composite drum;  and

4.    allowing the composite drum to cool.

18.    A method as claimed in claim 17 wherein the method includes the step of rotating the drum around its axis and shaving a

/...

layer off the outer surface of the outer
sleeve such that the axis of rotation of
the roller is coaxial with the central
axis of the outer surface of the outer
sleeve.

19.    A conveyor roller substantially as
hereinbefore described with reference to
Figure 1 of the drawings.

20.    A method of assembling a conveyor roller
substantially as hereinbefore described
with reference to Figures 2 to 4 of the
drawings.

FIG. 1

0126604

FIG. 2

FIG. 4

FIG. 3

European Patent
Office

**EUROPEAN SEARCH REPORT**

Application number

| Category | DOCUMENTS CONSIDERED TO BE RELEVANT | | EP 84303252.5 |
|---|---|---|---|
| | Citation of document with indication, where appropriate, of relevant passages | Relevant to claim | CLASSIFICATION OF THE APPLICATION (Int. Cl. ³) |
| X | GB - A - 2 014 275 (DAVY-LOEWY) <br> * Page 1, lines 14,74 * <br> -- | 1,2 | B 65 G 39/02 |
| X <br> A | DE - A1 - 3 035 216 (KS FOTO-TECHNIK) <br> * Claim 1 * <br> * Claim 1; page 5, lines 12,13 <br> -- | 1 <br> *4,5,6, 7,8,18 | |
| X <br> A | AT - B - 324 208 (WESERHÜTTE) <br> * Page 2, lines 35-43 * <br> * Page 2, lines 35-43 * <br> -- | 1 <br> 10,14 | |
| A | FR - A - 1 589 195 (PIRELLI) <br> * Fig. 2 * <br> -- | 1,10, 16 | TECHNICAL FIELDS SEARCHED (Int. Cl. ³) |
| A | DE - A1 - 3 140 546 (RUBBER) <br> * Claim 1 * <br> -- | 10,15 | B 65 G 39/00 |
| A | FR - A - 2 152 448 (PRECISMECA) <br> * Fig. 5,8 * <br> ---- | 9 | |

The present search report has been drawn up for all claims

| Place of search | Date of completion of the search | Examiner |
|---|---|---|
| VIENNA | 24-07-1984 | BAUMGARTNER |